# EUROPÄISCHE PATENTSCHRIFT

(11) **EP 1 616 336 B1**
(45) Veröffentlichungstag und Bekanntmachung des Hinweises auf die Patenterteilung: **09.07.2008**
(21) Anmeldenummer: 04739084.4
(22) Anmeldetag: 16.04.2004
(51) Int. Cl.: G21C 9/004, G21C 9/04

(54) **KERNTECHNISCHE ANLAGE UND VERFAHREN ZUM BETRIEB EINER KERNTECHNISCHEN ANLAGE**
NUCLEAR FACILITY AND METHOD FOR OPERATING A NUCLEAR FACILITY
INSTALLATION NUCLEAIRE ET PROCEDE D'EXPLOITATION D'UNE INSTALLATION NUCLEAIRE

(30) Priorität: 16.04.2003 DE 10318141; 16.04.2003 DE 10318081
(43) Veröffentlichungstag der Anmeldung: 18.01.2006
(73) Patentinhaber: AREVA NP GmbH, 91058 Erlangen (DE)
(72) Erfinder: MESETH, Johann, 64807 Dieburg (DE)
(74) Vertreter: Tergau & Pohl Patentanwälte
(86) Internationale Anmeldenummer: PCT/EP2004/004109
(87) Internationale Veröffentlichungsnummer: WO 2004/093095

(56) Entgegenhaltungen:
- EP-A- 0 476 563
- CH-A- 578 982
- GB-A- 563 023
- GB-A- 2 067 891
- US-A- 3 718 539
- US-A- 5 511 102
- US-B1- 6 243 432
- PATENT ABSTRACTS OF JAPAN Bd. 0165, Nr. 14 (P-1442), 22. Oktober 1992 (1992-10-22) & JP 4 188095 A (MITSUBISHI HEAVY IND LTD), 6. Juli 1992 (1992-07-06)
- PATENT ABSTRACTS OF JAPAN Bd. 1997, Nr. 08, 29. August 1997 (1997-08-29) & JP 9 090083 A (HITACHI LTD; HITACHI ENG CO LTD), 4. April 1997 (1997-04-04)
- PATENT ABSTRACTS OF JAPAN Bd. 0145, Nr. 85 (P-1148), 27. Dezember 1990 (1990-12-27) & JP 2 253195 A (TOSHIBA CORP), 11. Oktober 1990 (1990-10-11)

## Beschreibung

Die Erfindung betrifft eine kerntechnische Anlage, insbesondere eine Siedewasserreaktoranlage sowie ein Verfahren zum Betrieb der Anlage.

Bei einer modernen Siedewasserreaktoranlage ist ein Flutbecken als Reservoir für Kühlflüssigkeit vorgesehen, die im Bedarfsfall zur Kühlung des Reaktors eingesetzt wird. Das Flutbecken ist dabei üblicherweise derart angeordnet, dass das Kühlmittel allein durch Gravitationskräfte und ohne Einsatz von aktiven Komponenten, wie beispielsweise Pumpen, zum gewünschten Ort strömt. Bei der Siedewasserreaktoranlage ist weiterhin eine Kondensationskammer vorgesehen, die ein wichtiger Bestandteil des Kühlsystems einer modernen Siedewasserreaktoranlage ist. Das Kühlsystem ist zur Beherrschung eines Kühlmittelverluststörfalls ausgelegt, bei dem große Dampfmengen innerhalb des Sicherheitsbehälters in der so genannten Druckkammer freigesetzt werden können. Der freigesetzte Dampf wird zur Kondensation in die Kondensationskammer geleitet. Hierzu ist beispielsweise bei dem SWR1000-Konzept der Framatome ANP ein passiv wirkendes System vorgesehen, welches ohne externe Energiezufuhr und ohne aktive Komponenten auskommt. Und zwar sind mehrere Kondensationsrohre vorgesehen, welche ab einem bestimmten Überdruck in der Druckkammer einen Strömungsweg in die Kondensationskammer freigeben und somit die Einleitung des Dampfes in die Kondensationskammer ermöglichen. Für die Funktionsfähigkeit dieses Kühlsystems ist es daher notwendig, dass sich in der Druckkammer ein Überdruck aufbaut. In anderen Worten, die Kondensationskammer muss gasdicht gegenüber der Druckkammer abgeschlossen sein, so dass die Dampfeinleitung über das Kondensationsrohr sicher gewährleistet ist.

Beim Normalbetrieb wird dem Kühlmittel im Flutbecken Wärme zugeführt, so dass das Kühlmittel in regelmäßigen Zeitabständen gekühlt werden muss. Hierfür ist üblicherweise ein eigener Kühlkreislauf vorgesehen.

Der Erfindung liegt die Aufgabe zugrunde, einen zuverlässigen Betrieb der kerntechnischen Anlage zu gewährleisten.

Die Aufgabe wird gemäß der Erfindung gelöst durch eine kerntechnische Anlage, insbesondere Siedewasserreaktoranlage, mit den Merkmalen gemäß Anspruch 1.

Dieser Ausgestaltung liegt die Überlegung zugrunde, zur Kühlung der Kühlflüssigkeit im Flutbecken kaltes Kühlwasser einzuleiten und dabei auf einen separaten Kühlkreislauf für die Kühlflüssigkeit des Flutbeckens zu verzichten. Die überschüssige, warme Kühlflüssigkeit wird über die Überlaufeinrichtung der Kondensationskammer zugeführt. Durch diese Maßnahme entfällt die Notwendigkeit der Anordnung eines separaten Kühlkreislaufs für die Kühlflüssigkeit des Flutbeckens. Zur Abkühlung des Kühlwassers kann auf einen Kühlkreislauf für die Kondensationskammmer zurückgegriffen werden. Der apparative Aufwand, der notwendige Einbauraum und damit die erfoderlichen Kosten sind gering gehalten. Außerdem entfällt die Notwendigkeit, dem Füllstand im Flutbecken zu regeln.

Bei der Überleitung der Kühlflüssigkeit aus dem Flutbecken in die Kondensationskammer besteht die Gefahr, dass Gasteile vom Flutbecken mit in die Kondensationskammer gerissen werden. Üblicherweise steht das Flutbecken mit der Druckkammer in Verbindung, d.h. im Flutbecken und in der Druckkammer herrschen die gleichen Druckverhältnisse. Ein Mitreißen von Gasteilen in die Kondensationskammer würde in diesem Fall dazu führen, dass sich der Druck in der Kondensationskammer erhöht. Dies ist im Hinblick auf die Funktionsfähigkeit des Kühlsystems von Nachteil. In einer bevorzugten Weiterbildung ist daher vorgesehen, dass die Überlaufeinrichtung zur Gasabscheidung aus der Flüssigkeit ausgebildet ist. Somit ist eine unerwünschte Druckerhöhung in der Kondensationskammer sicher vermieden.

Zweckdienlicherweise umfasst das Flutbecken ein Speicherbecken und einen Separationsschacht, die durch eine einen Überlauf ermöglichende erste Trennwand getrennt sind. Weiterhin ist eine Überlaufleitung vorgesehen, deren erste Mündungsöffnung im unteren Bereich des Separationsschachts angeordnet ist.

Im Speicherbecken ist die Kühlflüssigkeit des Flutbeckens bevorratet. Bei Zuführung von Kühlflüssigkeit steigt der Flüssigkeitsspiegel an, bis die Kühlflüssigkeit über die erste Trennwand in den Separationsschacht überläuft und sich dort ansammelt. Da die Kühlflüssigkeit über die erste Mündungsöffnung, die vorzugsweise in unmittelbarer Nähe des Bodens oder direkt im Boden angeordnet ist, abgeleitet wird, ist die Gefahr der Gasmitnahme verringert. Denn evtl. vorhandene Gasteile können - bevor sie in die Überlaufleitung gelangen - aufsteigen und aus der Kühlflüssigkeit austreten.

In einer zweckdienlichen Ausgestaltung ist die Überlaufeinrichtung für einen maximalen Überlauf-Massestrom derart ausgebildet, dass bei Auftreten dieses maximalen Überlauf-Massestroms die Überlaufleitung einen vorbestimmten Strömungswiderstand aufweist, so dass sich im Separationsschacht ein Rückstau der Kühlflüssigkeit bis zu einer zum Strömungswiderstand korrelierenden Rückstauhöhe ausbildet.

Dieser Ausgestaltung liegt die Überlegung zugrunde, den Strömungswiderstand der Überlaufleitung beispielsweise durch die Wahl des Strömungsquerschnitts derart einzustellen, dass sich im Separationsschacht ein vorbestimmter Rückstau ausbildet, so dass die Kühlflüssigkeit, bevor sie über die Überlaufleitung in die Kondensationskammer geführt wird, im Separationsschacht ausreichend lange verweilt, damit in der Kühlflüssigkeit vorhandene Gasteilchen aus der Kühlflüssigkeit ausgasen können.

Vorzugsweise ist die Strömungsquerschnittsfläche des Separationsschachts derart ausgebildet, dass die Abwärtsgeschwindigkeit der rückgestauten Flüssigkeit kleiner als die Steiggeschwindigkeit von Gasblasen vorgegebener Größe ist. Unter Abwärtsgeschwindigkeit wird hierbei die mittlere Abwärtsgeschwindigkeit verstanden. Im Falle eines konstanten Massenstroms im stationären Fall ist die dem Separationsschacht zu- und abgeführte Menge an Kühlflüssigkeit identisch ist. Die Abwärtsgeschwindigkeit der rückgestauten Flüssigkeit, also die mittleren Geschwindigkeit, mit der sich ein Flüssigkeitsvolumen in Richtung zu der ersten Mündungsöffnung bewegt, ist dabei im Wesentlichen von der Strömungsquerschnittsfläche des Separationsschachts bestimmt. Andererseits ist die durch die Auftriebskraft bedingte Auftriebsgeschwindigkeit der Gasblasen maßgeblich von deren Größe (Durchmesser) abhängig. Durch die gezielte Einstellung der Abwärtsgeschwindigkeit kleiner als die Steiggeschwindigkeit der Gasblasen steigen letztere schneller auf als die Kühlflüssigkeit absinkt, so dass die Gasblasen die erste Mündungsöffnung der Überlaufleitung nicht erreichen.

In einer zweckdienlichen Weiterbildung ist die Überlaufeinrichtung derart ausgebildet, dass selbst bei Fehlen eines Massestroms, also bei einem Nulldurchsatz, die Flüssigkeit im Separationsschacht bis zu einer minimalen Rückstauhöhe ansteht. Dieser Ausgestaltung liegt die Überlegung zugrunde, dass beim Ingangsetzen bzw. Beenden der Zuführung von kalter Kühlflüssigkeit in das Flutbecken instationäre Phasen auftreten, bei denen der Flüssigkeitsmassenstau vom Nulldurchsatz zum maximalen Massenstrom ansteigt bzw. wieder auf den Nulldurchsatz abfällt. Während dieser instationären Phasen muss bis zum Erreichen des vollständigen Massendurchsatzes die Kühlflüssigkeit im Separationsschacht erst bis zur maximalen Rückstauhöhe angesammelt bzw. wieder abgebaut werden. In diesen instationären Phasen stürzt die Kühlflüssigkeit über eine große Fallhöhe in den Separationsschacht und es besteht die Gefahr, dass erhebliche Gasmengen mitgerissen werden, die in Ermangelung eines Rückstaus unter Umständen direkt in die Überlaufleitung und somit in die Kondensationskammer gelangen könnten. Diese Gefahr wird durch die Gewährleistung einer minimalen Rückstauhöhe im Separationsschacht verringert.

Zweckdienlicherweise ist zur Einstellung der minimalen Rückstauhöhe die Überlaufleitung nach Art eines Siphons mit einem oberen Siphonbogen ausgebildet, durch den die minimale Rückstauhöhe bestimmt ist.

Gemäß einer bevorzugten Weiterbildung umfasst der Separationsschacht in seinem Bodenbereich eine Separationskammer und eine Abflusskammer, die durch eine einen Überlauf ermöglichende zweite Trennwand getrennt sind. Die erste Mündungsöffnung der Überlaufleitung ist hierbei in der Abflusskammer angeordnet. In der Separationskammer wird zunächst die in den Separationsschacht herabstürzende Kühlflüssigkeit gesammelt, so dass sie sich dort beruhigen kann und evtl. schon die ersten Gasblasen austreten können. Von der Separationskammer läuft die Kühlflüssigkeit dann mit nur geringen Turbulenzen und weitgehend gasfrei in die Abflusskammer, so dass auch bei den instationären Phasen ein Gasübertritt in die Kondensationskammer vermieden ist.

Für die Kühlflüssigkeit des Flutbeckens und die Kühlflüssigkeit der Kondensationskammer ist ein gemeinsamer Kühlkreislauf vorgesehen, welcher die Überlaufeinrichtung umfasst. Dieser gemeinsame Kühlkreislauf ist dabei insbesondere durch eine Pumpleitung, eine Pumpe und einen Wärmetauscher gebildet. Die Pumpleitung führt von der Kondensationskammer zum Flutbecken, so dass im Umwälzprinzip die Kühlflüssigkeit aus der Kondensationskammer in das Flutbecken und von dort wieder in die Kondensationskammer zurückgeführt wird. Über den vorgesehenen Wärmetauscher des gemeinsamen Kühlkreislaufs wird überschüssige Wärme abgeführt. Durch den gemeinsamen Kühlkreislauf sowohl für die Kühlflüssigkeit des Flutbeckens als auch für die der Kondensationskammer entfällt die Notwendigkeit zweier separater Kühlkreisläufe. Damit werden der notwendige Einbauraum und somit der Kostenaufwand gering gehalten.

Die Aufgabe wird gemäß der Erfindung weiterhin gelöst durch ein Verfahren zum Betrieb einer kerntechnischen Anlage, insbesondere einer Siedewasserreaktoranlage, mit den Merkmalen gemäß Patentanspruch 10. Die im Hinblick auf die Anlage angegebenen Vorteile und bevorzugten Ausführungsvarianten sind sinngemäß auch auf das Verfahren anzuwenden. Bevorzugte Weiterbildungen sind zudem in den abhängigen Ansprüchen niedergelegt.

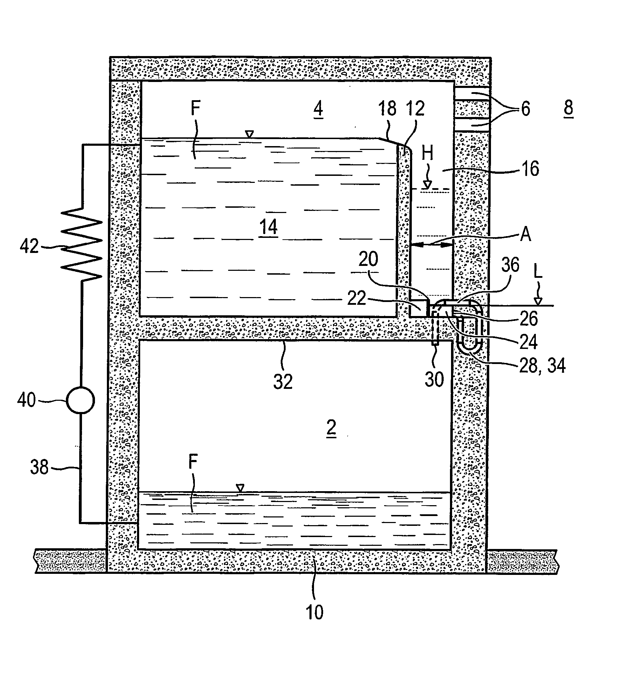

Ein Ausführungsbeispiel der Erfindung wird im Folgenden anhand der einzigen Figur näher erläutert. Diese Figur zeigt einen grob vereinfachten Ausschnitt eines Sicherheitsbehälters einer Siederwasserreaktoranlage.

In der Figur sind als Teile des Sicherheitsbehälters eine Kondensationskammer 2 sowie ein über der Kondensationskammer 2 angeordnetes Flutbecken 4 dargestellt. Das Flutbecken 4 und die Kondensationskammer 2 sind vorzugsweise gemeinsam im Innenraum des Sicherheitsbehälters angeordnet. Das Flutbecken 4 ist über eine offene Verbindung 6 mit dem als Druckkammer 8 bezeichneten Innenraum des Sicherheitsbehälters verbunden, so dass zwischen der Druckkammer 8 und dem Flutbecken 4 ein Gasaustausch und somit ein Druckausgleich stattfindet. Die Kondensationskammer 2 und das Flutbecken 4 sind durch eine Wandstruktur 10 aus Beton voneinander getrennt, wobei die Kondensationskammer 2 zum Flutbecken 4 und zur Druckkammer 8 während des Normalbetriebs der Anlage gasdicht verschlossen ist. Das Flutbecken 4 und die Kondensationskammer sind Teil eines Kühlsystems, welches weiterhin ein hier nicht dargestelltes Kondensationsrohr umfasst. Das Kühlsystem ist auch für die Beherrschung eines Kühlmittelverluststörfalls ausgelegt, bei dem in der Druckkammer große Dampfmengen auftreten können, die über das Kondensationsrohr in die Kühlflüssigkeit F der Kondensationskammer 2 eingeleitet werden.

Das Flutbecken 4 ist durch eine erste Trennwand 12 unterteilt in ein Speicherbecken 14 und einen Separationsschacht 16. Im Speicherbecken 14 ist die für eine Notkühlung vorgesehene Kühlflüssigkeit F bevorratet. Am oberen Ende der ersten Trennwand 12 befindet sich eine Überlaufkante 18. Für einen möglichst turbulenzfreien Überlauf der Kühlflüssigkeit F ist diese schräg verlaufend ausgebildet. Am Boden des Separationsschachts 16 ist eine zweite Trennwand 20 angeordnet, die den Bodenbereich in eine sich an die erste Trennwand 12 anschließende Separationskammer 22 und eine Abflusskammer 24 unterteilt. Im Bodenbereich der Abflusskammer 24 ist eine erste Mündungsöffnung 26 einer Überlaufleitung 28 angeordnet. Deren zweite Mündungsöffnung 30 ist im oberen Bereich der Kondensationskammer 2 und insbesondere unmittelbar am oder in deren Decke 32 angeordnet. Die Überlaufleitung 28 ist nach Art eines Siphons mit einem unteren Siphonbogen 34 und einem oberen Siphonbogen 36 ausgebildet. Die Überlaufleitung 28 ist vorzugsweise eine einfache Rohrleitung ohne weiteren Einbauten und verläuft insbesondere nahezu vollständig in der Wandstruktur 10. Der durch die Überlaufleitung 28 gebildete Strömungsweg bleibt somit auch bei einer schadhaften Rohrleitung funktionstüchtig. Der Separationsschacht 16 mit der Überlaufkante 18 der Separationskammer 22 und der Abflusskammer 24 sowie die Überlaufleitung 28 bilden eine Überlaufeinrichtung für überschüssige Kühlflüssigkeit F.

Diese Überlaufeinrichtung ist Teil eines gemeinsamen Kühlkreislaufs für die im Flutbecken 4 und in der Kondensationskammer 2 befindliche Kühlflüssigkeit F. Dieser gemeinsame Kühlkreislauf weist neben der Überlaufeinrichtung eine Pumpleitung 38, eine Pumpe 40 sowie einen Wärmetauscher 42 auf, wobei über die Pumpleitung 38 Kühlflüssigkeit F aus der Kondensationskammer 2 in das Flutbecken 4 über den Wärmetauscher 40 gepumpt werden kann. Durch die Bereitstellung eines gemeinsamen Kühlkreislaufs entfällt die Notwendigkeit der Anordnung von mehreren separaten Kühlkreisläufen. Dadurch sind die Installationskosten und der benötigte Bauraum gering gehalten.

Eine Kühlung der Kühlflüssigkeit F im Flutbecken 4 ist von Zeit zu Zeit aufgrund eines Wärmeeintrags beim normalen Betrieb der Anlage erforderlich. Hierzu wird über den gemeinsamen Kühlkreislauf Kühlflüssigkeit F aus der Kondensationskammer 2 durch den Wärmetauscher 42 gepumpt, dabei abgekühlt und anschließend in das Speicherbecken 14 eingeleitet. Übersteigt die Füllstandshöhe im Speicherbecken 16 die durch die Überlaufkante 18 definierte maximale Füllstandshöhe, läuft die überschüssige Kühlflüssigkeit F über die Überlaufkante 18 in den Separationsschacht 16 über und von dort über die Überlaufleitung 28 wieder zurück in die Kondensationskammer 2.

Bei der Rückführung der Kühlflüssigkeit F in die Kondensationskammer 2 ist die Einleitung von Gasteilen zu vermeiden, da ansonsten ein unerwünschter Druckanstieg in der Kondensationskammer 2, verbunden mit einem entsprechenden Druckabfall in der Druckkammer 8, erfolgen würde. Daher ist die Überlaufeinrichtung zur Abscheidung von Gasteilen, die sich in der überschüssigen Kühlflüssigkeit F befinden, ausgebildet. Die Gasabscheidung wird hierbei insbesondere durch den speziellen Aufbau des Separationsschachts 16 gewährleistet. Durch die beiden Trennwände 12,20 ist hierbei eine zweistufige Gasabscheidung vorgesehen, wobei die durch die zweite Trennwand 20 gebildete zweite Stufe insbesondere bei kleinen Massenströmen wirksam ist. Das Funktionsprinzip der Gasabscheidung ist wie folgt:

Beim Beginn der Umwälzung der Kühlflüssigkeit F steigt während einer instationären Phase der Massenstrom der überschüssigen Kühlflüssigkeit F, die in den Separationsschacht 16 gelangt, kontinuierlich an, bis der maximale Massenstrom erreicht wird und sich eine stationäre Phase ausbildet. Während dieser stationären Phase ist der dem Separationsschacht 16 zu- und abgeleitete Massenstrom an Kühlflüssigkeit F identisch. Der Strömungswiderstand der Überlaufleitung 28 ist für diesen maximalen Massestrom auf einen bestimmten Wert eingestellt, so dass sich die Kühlflüssigkeit F im Separationsschacht bis zu einer maximalen Rückstauhöhe H rückstaut. Diese maximale Rückstauhöhe H beträgt beispielsweise einige Meter und liegt etwa auf 2/3 der Höhe der ersten Trennwand 12 bzw. der Höhe der Überlaufkante 18.

Nach Abschalten der Pumpe 40 verringert sich der Massestrom wieder, bis schließlich keine überschüssige Kühlflüssigkeit F mehr in den Separationsschacht 16 gelangt (Nulldurchsatz). Die Höhe der rückgestauten Kühlflüssigkeit F sinkt kontinuierlich, bis im Separationsschacht 16 eine minimale Rückstauhöhe L erreicht wird. Diese minimale Rückstauhöhe L ist definiert durch die Höhe des oberen Siphonbogens 36. Geringfügig darüber stellt sich in der Separationskammer 22 ein etwas höherer Füllstand ein, da die zweite Trennwand 20 eine Höhe oberhalb der minimalen Füllstandshöhe H aufweist. Die minimale Rückstauhöhe L beträgt beispielsweise 0,5 m.

Bei der stationären Phase mit dem maximalen Massenstrom stellt sich eine mittlere Abwärtsgeschwindigkeit der rückgestauten Kühlflüssigkeit F ein. Diese Abwärtsgeschwindigkeit ist ein Betrag für die Geschwindigkeit, mit der ein gedachtes Flüssigkeitsvolumen im Separationsschacht 16 in Richtung zur Überlaufleitung 28 gelangt. Im stationären Fall ist diese Abwärtsgeschwindigkeit maßgeblich bestimmt durch die Strömungsquerschnittsfläche A des Separationsschachts 16. Beim Überlauf in den Separationsschacht 16 mitgerissene Gasteilchen bilden in der Kühlflüssigkeit F Gasbläschen, die mit einer durch die Auftriebskraft bedingten Steiggeschwindigkeit in der rückgestauten Flüssigkeit aufwärts steigen. Die Abwärtsgeschwindigkeit und die Steiggeschwindigkeit sind also gegensätzlich gerichtet. Die Steiggeschwindigkeit hängt von der Größe der Gasblasen ab. Die Strömungsquerschnittsfläche A des Separationsschachts ist nunmehr beispielsweise auf mehrere Quadratmeter derart eingestellt, dass die Steiggeschwindigkeit von Gasblasen einer vorgegebenen Größe, beispielsweise eines Durchmessers von 1 mm, größer ist als die Abwärtsgeschwindigkeit. Dadurch ist gewährleistet, dass diese Gasblasen schneller aufsteigen als Kühlflüssigkeit F zur Überlaufleitung 28 gelangt.

Bei den kleinen Massenströmen während der instationären Phase besteht das Problem, dass aufgrund der größeren Fallhöhe von der Überlaufkante 18 bis zu der dann geringen Höhe der rückgestauten Kühlflüssigkeit F der Gaseintrag und die Turbulenzen in der Kühlflüssigkeit F im Separationsschacht 16 größer sind als bei der stationären Phase. Daher ist die zweite Stufe der Gasabscheidung vorgesehen, die im Wesentlichen gebildet ist aus der Separationskammer 22 und der Abflusskammer 24. In der Separationskammer 22 wird zunächst die über die Überlaufkante 18 herabstürzende Kühlflüssigkeit F aufgefangen und gesammelt, bis sie über die zweite Trennwand 20 weitgehend frei von Turbulenzen überläuft. In der Separationskammer 22 findet also bereits ein großer Teil der Gasabscheidung statt. Beim Überlauf über die zweite Trennwand 20 werden nur geringe Gasanteile mitgerissen. Maßgebend hierfür ist, dass die Höhe der zweiten Trennwand 20 und die minimale Rückstauhöhe L in der Abflusskammer 24 nur geringe Unterschiede beispielsweise von wenigen Zentimetern aufweisen, so dass in der Abflusskammer 24 keine stärkerenTurbulenzen erzeugt werden und kein Gaseintrag stattfindet. Aus der Abflusskammer 24 läuft anschließend die weitgehend gasfreie Kühlflüssigkeit F über die Überlaufleitung 28 in die Kondensationskammer 2 über.

Durch die Hintereinanderschaltung der ersten und zweiten Trennwand 12,20 mit einer sehr großen Höhe von mehreren Metern bzw. mit einer sehr kleinen Höhe von weniger als 1 m in Verbindung mit der speziellen Dimensionierung des Separationsschachts 16 sowie der Überlaufleitung 16 wird eine effektive Gasabscheidung bewirkt, ohne dass störanfällige aktive Komponenten, wie beispielsweise rotierende oder durch Fremdenergie angetriebene Teile, notwendig werden. Die Gasabscheidung erfolgt daher rein passiv und ist somit nicht störanfällig.

### Bezugszeichenliste

- 2: Kondensationskammer
- 4: Flutbecken
- 6: offene Verbindung
- 8: Druckkammer
- 10: Wandstruktur
- 12: erste Trennwand
- 14: Speicherbecken
- 16: Separationsschacht
- 18: Überlaufkante
- 20: zweite Trennwand
- 22: Separationskammer
- 24: Abflusskammer
- 26: erste Mündungsöffnung
- 28: Überlaufleitung
- 30: zweite Mündungsöffnung
- 32: Decke
- 34: unterer Siphonbogen
- 36: oberer Siphonbogen
- 38: Pumpleitung
- 40: Pumpe
- 42: Wärmetauscher

- F: Kühlflüssigkeit
- H: Rückstauhöhe
- L: minimale Rückstauhöhe
- A: Strömungsquerschnittsfläche

## Patentansprüche

1. Kernreaktoranlage mit einem für die Bevorratung von Kühlflüssigkeit (F) zu Notkühlzwecken vorgesehenen Kernflutbecken (4), mit einer Kondensationskammer (2) und mit einer vom Kernflutbecken (4) zur Kondensationskammer (2) angeordneten Überlaufeinrichtung (16,28) für überschüssige Kühlflüssigkeit (F), wobei für die Kühlflüssigkeit (F) des Flutbeckens (4) und die Kühlflüssigkeit (F) der Kondensationskammer (2) ein gemeinsamer Kühlkreislauf (16,28,38,40,42) vorgesehen ist, welcher die Überlaufeinrichtung (16,28) umfasst.

2. Anlage nach Anspruch 1 oder 2, bei der die Überlaufeinrichtung (16,28) zur Gasabscheidung aus der Flüssigkeit (F) ausgebildet ist.

3. Anlage nach Anspruch 1 oder 2, bei der das Flutbecken (4) ein Speicherbecken (14) und einen Separationsschacht (16) umfasst, die durch eine einen Überlauf ermöglichende erste Trennwand (12) getrennt sind und wobei eine Überlaufleitung (28) vorgesehen ist, deren erste Mündungsöffnung (26) im unteren Bereich des Separationsschachts (16) angeordnet ist.

4. Anlage nach Anspruch 3, bei der die erste Mündungsöffnung (26) im oder in unmittelbarer Nähe des Bodens des Separationsschachts (16) angeordnet ist.

5. Anlage nach Anspruch 3 oder 4, bei der die Überlaufeinrichtung (16,28) für einen maximalen Überlauf-Massenstrom derart ausgebildet ist, dass bei Auftreten des maximalen Überlauf-Massenstroms die Überlaufleitung (28) einen vorbestimmten Strömungswiderstand aufweist, so dass sich im Separationsschacht (16) ein Rückstau der Kühlflüssigkeit (F) bis zu einer maximalen Rückstauhöhe (H) ausbildet.

6. Anlage nach Anspruch 5, bei der die Strömungsquerschnittsfläche (A) des Separationsschachts (16) derart ausgebildet ist, dass die Abwärtsgeschwindigkeit der rückgestauten Kühlflüssigkeit (F) kleiner als die Steiggeschwindigkeit von Gasblasen vorgegebener Größe ist.

7. Anlage nach einem der Ansprüche 3 bis 6, bei der die Überlaufeinrichtung (16,28) derart ausgebildet ist, dass selbst bei Fehlen eines Massestroms die Kühlflüssigkeit (F) im Separationsschacht (16) bis zu einer minimalen Rückstauhöhe (L) ansteht.

8. Anlage nach Anspruch 7, bei der die Überlaufleitung (28) nach Art eines Syphons mit einem oberen Syphonbogen (36) ausgebildet ist und die minimale Rückstauhöhe (L) durch den oberen Syphonbogen (36) bestimmt ist.

9. Anlage nach einem der Ansprüche 3 bis 8, bei der der Separationsschacht (16) in seinem Bodenbereich eine Separationskammer (27) und eine Abflusskammer (24) umfasst, die durch eine einen Überlauf ermöglichende zweite Trennwand (20) getrennt sind und wobei die erste Mündungsöffnung (26) der Überlaufleitung (28) in der Abflusskammer (24) angeordnet ist.

10. Verfahren zum Betrieb einer Kernreaktoranlage, bei dem in vorbestimmten Betriebszuständen einem für die Bevorratung von Kühlflüssigkeit (F) zu Notkühlzwecken vorgesehenen Kernflutbecken (4) eine das Fassungsvermögen desselben übersteigende Menge an Kühlflüssigkeit (F) zugeleitet wird und die überschüssige Kühlflüssigkeit (F) über eine Überlaufeinrichtung (16,28) in eine Kondensationskammer (2) übergeleitet wird, wobei die Kühlflüssigkeit (F) des Flutbeckens (4) und die der Kondensationskammer (2) in einem gemeinsamem Kühlkreislauf (16,28,38,40,42), welcher die Überlaufeinrichtung (16,28) umfasst, geführt werden.

11. Verfahren nach Anspruch 10, bei dem aus der überschüssigen Kühlflüssigkeit (F) Gasteile abgeschieden werden.

12. Verfahren nach Anspruch 10 oder 11, bei dem die überschüssige Kühlflüsigkeit (F) bei hohen Massenströmen vor dem Übertritt in die Kondensationskammer (2) in einem Separationsschacht (16) zurückgestaut wird und dort die Abscheidung der Gasteile durch Aufsteigen erfolgt.

13. Verfahren nach einem der Ansprüche 10 bis 12, bei dem bei geringen Masseströmen die überschüssige Kühlflüssigkeit (F) im Bodenbereich des Separationsschachts (16) zunächst in einer Separationskammer (22) gesammelt und von dort in eine Abflusskammer (24) geleitet wird, aus der die Kühlflüssigkeit (F) in die Kondensationskammer (2) gelangt.

## Claims

1. Nuclear reactor plant having a core-flooding basin (4) provided for storing cooling liquid (F) for the purpose of emergency cooling, having a condensation chamber (2), and having an overflow device (16, 28) arranged from the core-flooding basin (4) to the condensation chamber (2) for excessive cooling liquid (F), a common cooling loop (16, 28, 38, 40, 42) comprising the overflow device (16, 28) being provided for the cooling liquid (F) of the core-flooding basin (4) and the cooling liquid (F) of the condensation chamber (2).

2. Plant according to claim 1, wherein the overflow device (16, 28) is designed for separating gas from the liquid (F).

3. Plant according to claim 1 or 2, wherein the flooding basin (4) comprises a storage basin (14) and a separation shaft (16) which are separated by a first parting wall (12) enabling an overflow, an overflow conduit (28) being provided whose first outlet opening (26) is arranged in the lower part of the separation shaft (16).

4. Plant according to claim 3, wherein the first outlet opening (26) is arranged in, or very close to, the bottom of the separation shaft (16).

5. Plant according to claim 3 or 4, wherein the overflow device (16, 28) for a maximum overflow mass flow is designed such that upon occurrence of the maximum overflow mass flow, the overflow conduit (28) has a predetermined flow resistance, so that a back pressure of the cooling liquid (F) develops in the separation shaft (16), up to a maximum back-pressure height (H).

6. Plant according to claim 5, wherein the cross sectional area of flow (A) of the separation shaft (16) is designed such that the downward speed of the backed up cooling liquid (F) is smaller than the rising speed of gas bubbles of a specified size.

7. Plant according to any of claims 3 to 6, wherein the overflow device (16, 28) is designed such that even in case of absence of a mass flow, the cooling liquid (F) stands in the separation shaft (16) up to a minimum back-pressure height (L).

8. Plant according to claim 7, wherein the overflow conduit (28) is designed in the manner of a siphon with an upper siphon bend (36) and the minimum back-pressure height (L) is determined by the upper siphon bend (36).

9. Plant according to any of claims 3 to 8, wherein the separation shaft (16) comprises in its bottom area a separation chamber (27) and a drain chamber (24), separated by a second parting wall (20) enabling an overflow, and wherein the first outlet opening (26) of the overflow conduit (28) is arranged in the drain chamber (24).

10. Method for operating a nuclear reactor plant, wherein, at predetermined operating states, a quantity of cooling liquid (F) exceeding the volumetric capacity of a core-flooding basin (4) provided for storing cooling liquid (F) for the purpose of emergency cooling is fed to said core-flooding basin (4), and wherein the excessive cooling liquid (F) is transferred through an overflow device (16, 28) to a condensation chamber (2), the cooling liquid (F) of the flooding basin (4) and the cooling liquid (F) of the condensation chamber (2) being carried in a common cooling loop (16, 28, 38, 40, 42) comprising the overflow device (16, 28).

11. Method according to claim 10, wherein gas parts are separated from the excessive cooling liquid (F).

12. Method according to claim 10 or 11, wherein, in case of high mass flows, the excessive cooling liquid (F) is backed up, before entering into the condensation chamber (2), in a separation shaft (16), where the separation of the gas parts is effected through rising.

13. Method according to any of claims 10 to 12, wherein, in case of low mass flows, the excessive cooling liquid (F) in the bottom area of the separation shaft (16) is first of all collected in a separation chamber (22) and conveyed from there into a drain chamber (24), from where the cooling liquid (F) gets into the condensation chamber (2).

## Revendications

1. Installation de réacteur nucléaire ayant un bassin d'immersion du coeur (4) prévu pour mettre en réserve du liquide de refroidissement (F) à des fins de refroidissement de secours, ayant une chambre de condensation (2) et ayant un dispositif de débordement (16, 28) aménagé du bassin d'immersion du coeur (4) à la chambre de condensation (2) pour le liquide de refroidissement (F) excédentaire, un circuit de refroidissement commun (16, 28, 38, 40, 42) comprenant le dispositif de débordement (16, 28) étant prévu pour le liquide de refroidissement (F) du bassin d'immersion du coeur (4) et le liquide de refroidissement (F) de la chambre de condensation (2).

2. Installation selon la revendication 1, dans laquelle le dispositif de débordement (16, 28) est conçu pour séparer du gaz du liquide (F).

3. Installation selon la revendication 1 ou 2, dans laquelle le bassin d'immersion (4) comprend un bassin réservoir (14) et un puits de séparation (16) qui sont séparés par une première paroi de séparation (12) permettant un débordement, une conduite de débordement (28) étant prévue dont le premier débouché (26) est aménagé dans la partie inférieure du puits de séparation (16).

4. Installation selon la revendication 3, dans laquelle le premier débouché (26) est aménagé dans le fond, ou très proche au fond, du puits de séparation (16).

5. Installation selon la revendication 3 ou 4, dans laquelle le dispositif de débordement (16, 28) pour un flux massique maximal de débordement est conçu de manière que lors de l'occurrence du flux massique maximal de débordement, la conduite de débordement (28) a une résistance de flux prédéterminée, de façon qu'une retenue du liquide de refroidissement (F) développe dans le puits de séparation (16), jusqu'à une hauteur (H) maximale de retenue.

6. Installation selon la revendication 5, dans laquelle l'aire de la section du flux (A) du puits de séparation (16) est conçu de manière que la vitesse descendante du liquide de refroidissement (F) retenu est inférieure à la vitesse de montée de bulles de gaz d'une grandeur prédéfinie.

7. Installation selon l'une quelconque des revendications 3 à 6, dans laquelle le dispositif de débordement (16, 28) est conçu de manière que, même en cas d'absence d'un flux massique, le liquide de refroidissement (F) atteint dans le puits de séparation (16) une hauteur de retenue minimale (L).

8. Installation selon la revendication 7, dans laquelle la conduite de débordement (28) est conçu comme un siphon ayant une courbure de siphon supérieure (36) et la hauteur de retenue minimale (L) est déterminée par la courbure de siphon supérieure (36).

9. Installation selon l'une quelconque des revendications 3 à 8, dans laquelle le puits de séparation (16) comprend dans sa zone de fond une chambre de séparation (27) et une chambre de découlement (24), séparées par une seconde paroi de séparation (20) permettant un débordement, et dans laquelle le premier débouché (26) du conduite de débordement (28) est aménagé dans la chambre de découlement (24).

10. Procédé de fonctionnement d'une installation de réacteur nucléaire, dans laquelle, lors d'états de fonctionnement prédéterminés, une quantité de liquide de refroidissement (F) excédant la capacité volumétrique d'un bassin d'immersion du coeur (4) prévu pour mettre en réserve du liquide de refroidissement (F) à des fins de refroidissement de secours est alimentée à ce bassin d'immersion du coeur (4), et dans laquelle le liquide de refroidissement (F) excédentaire est transféré à travers d'un dispositif de débordement (16, 28) à une chambre de condensation (2), le liquide de refroidissement (F) du bassin d'immersion (4) et le liquide de refroidissement (F) de la chambre de condensation (2) étant conduits dans un circuit de refroidissement commun (16, 28, 38, 40, 42) comprenant le dispositif de débordement (16, 28).

11. Procédé selon la revendication 10, dans laquelle des parties de gaz sont séparées du liquide de refroidissement (F) excédentaire.

12. Procédé selon la revendication 10 ou 11, dans laquelle, en cas de flux massiques forts, le liquide de refroidissement (F) excédentaire est retenu, avant d'entrer dans la chambre de condensation (2), dans un puits de séparation (16), où la séparation des parties de gaz est effectuée par montée.

13. Procédé selon l'une quelconque des revendications 10 à 12, dans laquelle, en cas de flux massiques faible, le liquide de refroidissement (F) excédentaire dans la zone de fond du puits de séparation (16) est d'abord accumulé dans une chambre de séparation (22) et conduit de là vers une chambre de découlement (24), d'où le liquide de refroidissement (F) parvient à la chambre de condensation (2).
